# EUROPEAN PATENT APPLICATION

(11) **EP 3 945 515 A1**
(43) Date of publication of application: **02.02.2022**
(21) Application number: 21188218.8
(22) Date of filing: 28.07.2021
(51) Int. Cl.: G09B 5/06, G09B 19/06

(54) **LESSON SYSTEM, LESSON METHOD, AND PROGRAM**

(30) Priority: 31.07.2020 JP 2020131139
(71) Applicant: TOYOTA JIDOSHA KABUSHIKI KAISHA, Toyota-shi, Aichi-ken 471-8571 (JP)
(72) Inventor: KAKU, Wataru, Aichi-ken, 471-8571 (JP); LEE, Haeyeon, Aichi-ken, 471-8571 (JP); HORI, Tatsuro, Aichi-ken, 471-8571 (JP); WATANABE, Narimasa, Aichi-ken, 471-8571 (JP)
(74) Representative: D Young & Co LLP

(57) **Abstract**

To provide a lesson system, a lesson method, and a program by which a high learning effect is achieved. A lesson system (1000) includes: an experience video storage unit configured to store an experience video based on an actual experience of an experiencer; a sensor configured to detect a motion of a student; a microphone (132) configured to detect a voice of the student; a reproduction processing unit (110) configured to generate a lesson video in which an image of a teacher is superimposed on the experience video; a display unit configured to display the lesson video to the student; a speaker (142) for outputting audio configured to output audio corresponding to the lesson video; and a progression control unit (300) configured to control progression of the lesson video displayed on the display unit in accordance with the result of detection by at least one the sensor and the microphone.

## Description

### BACKGROUND

The present disclosure relates to a lesson system, a lesson method, and a program.

Japanese Unexamined Patent Application Publication No. 2019-95586 discloses a language lesson system in which a student can take a language lesson through a network. According to Japanese Unexamined Patent Application Publication No. 2019-95586, an article, in which an experience of studying a language posted from a poster's terminal is reproduced, can be viewed.

### SUMMARY

There is a demand for enhancing the learning effect in this kind of system.

The present disclosure has been made in view of the background mentioned above. An object of the present disclosure is to provide a lesson system, a lesson method, and a program by which a high learning effect is achieved.

A lesson system according to an exemplary aspect includes:
a video acquisition unit configured to acquire at least one experience video from a storage unit, the storage unit being configured to store at least one of an experience video based on an actual experience of an experiencer and a simulated experience video;
a motion information acquisition unit configured to acquire sensing information related to a motion of a student;
an audio information acquisition unit configured to acquire sensing information related to a voice of the student;
a reproduction processing unit configured to generate a lesson video in which an image of a teacher is superimposed on the experience video;
a video output unit configured to output an output signal for causing a display unit for displaying a video to display the lesson video to the student;
an audio output unit configured to output an output signal for causing a speaker for outputting audio to output audio corresponding to the lesson video; and
a progression control unit configured to control progression of the lesson video displayed on the display unit by controlling each of the output of the video output unit and the output of the audio output unit in accordance with at least one of the sensing information acquired by the motion information acquisition unit and the sensing information acquired by the audio information acquisition unit.

The aforementioned lesson system further includes a camera for the teacher configured to take an image of the teacher who is at a site remote from the student, in which the display unit may be configured to display the lesson video in which the image of the teacher taken by the camera for the teacher is superimposed on the experience video.

In the aforementioned lesson system, the image of the teacher may be an avatar image of the teacher.

In the aforementioned lesson system, the display unit may include a projector for projecting the lesson video on a wall of a classroom where the student is present.

The aforementioned lesson system further includes a microphone for the teacher configured to detect a voice of the teacher, in which the speaker may be configured to output the voice of the teacher along with audio included in the lesson video.

A lesson method according to another exemplary aspect includes the steps of:
acquiring at least one experience video from a video storage unit, the video storage unit being configured to store at least one of an experience video based on an actual experience of an experiencer and a simulated experience video;
acquiring sensing information related to a motion of a student;
acquiring sensing information related to a voice of the student;
generating a lesson video in which an image of a teacher is superimposed on the experience video;
outputting an output signal for causing a display unit for displaying a video to display the lesson video to the student;
outputting an output signal for causing a speaker for outputting audio to output audio corresponding to the lesson video; and
controlling progression of the lesson video displayed on the display unit by controlling each of the output signal of the video and the output signal of the audio in accordance with at least one of the sensing information related to the motion of the student and the sensing information related to the voice of the student.

In the aforementioned lesson method, a camera for the teacher configured to take an image of the teacher who is at a site remote from the student is disposed, and the lesson video in which the image of the teacher taken by the camera for the teacher may be superimposed on the experience video is displayed by the display unit.

In the aforementioned lesson method, the image of the teacher may be an avatar image of the teacher.

In the aforementioned lesson method, the display unit may include a projector for projecting the lesson video on a wall of a classroom where the student is present.

In the aforementioned lesson method, a microphone for the teacher configured to detect a voice of the teacher is provided, and the voice of the teacher may be output along with audio included in the lesson video.

A program according to further another exemplary aspect is a program for causing a computer to perform a lesson method including the steps of:
acquiring at least one experience video from an experience video storage unit, the experience video storage unit being configured to store at least one of an experience video based on an actual experience of an experiencer and a simulated experience video;
acquiring sensing information related to a motion of a student;
acquiring sensing information related to a voice of the student;
generating a lesson video in which an image of a teacher is superimposed on the experience video;
outputting an output signal for causing a display unit for displaying a video to display the lesson video to the student;
outputting an output signal for causing a speaker for outputting audio to output audio corresponding to the lesson video; and
controlling progression of the lesson video displayed on the display unit by controlling each of the output signal of the video and the output signal of the audio in accordance with at least one of the sensing information related to the motion of the student and the sensing information related to the voice of the student.

In the aforementioned program, a camera for the teacher configured to take an image of the teacher who is at a site remote from the student is disposed, and the lesson video in which the image of the teacher taken by the camera for the teacher is superimposed on the experience video may be displayed by the display unit.

In the aforementioned program, the image of the teacher may be an avatar image of the teacher.

In the aforementioned program, the display unit may include a projector for projecting the lesson video on a wall of a classroom where the student is present.

In the aforementioned program, a microphone for the teacher configured to detect a voice of the teacher is provided, and the voice of the teacher may be output along with audio included in the lesson video.

An object of the present disclosure is to provide a lesson system, a lesson method, and a program by which a high learning effect is achieved.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a control block diagram showing a lesson system according to an embodiment;
Fig. 2 is a diagram showing an example of a lesson video;
Fig. 3 is a diagram showing an example of a lesson video;
Fig. 4 is a diagram showing an example of a lesson video;
Fig. 5 is a diagram showing an example of a lesson video;
Fig. 6 is a flowchart showing an example of a lesson video; and
Fig. 7 is a diagram showing a hardware configuration of a lesson system.

### DESCRIPTION OF EMBODIMENTS

Hereinbelow, embodiments of the present disclosure will be described with reference to the embodiments, however the present disclosure according to the claims is not limited to the embodiments described below. Further, not all of the components/structures described in the embodiments are necessarily indispensable as means for solving the problem. Note that the following description and the attached drawings are appropriately shortened and simplified where appropriate to clarify the explanation. In the figures, the identical reference symbols denote identical structural elements and the redundant explanation thereof is omitted.

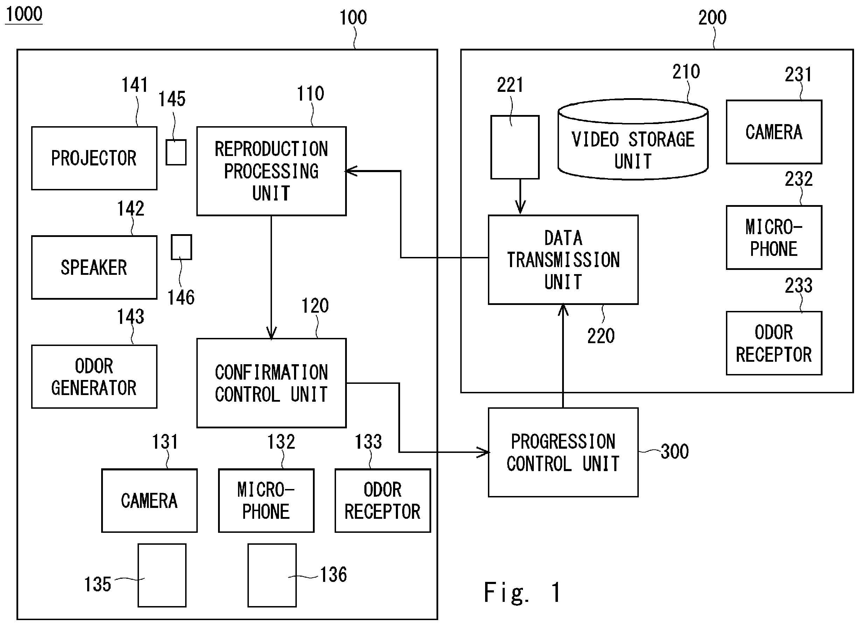

A lesson system according to this embodiment is a system for providing a language lesson or the like to a student. Fig. 1 is a control block diagram showing a lesson system 1000. The lesson system 1000 is a system for providing a lesson to a student who is at a remote site. For instance, in the lesson system 1000, communication can be established between a student in a first room 100 and a teacher in a second room 200. The second room 200 is at a site remote from the first room 100, and the two rooms are connected with each other through a network such as the internet.

The first room 100 is equipped with a reproduction processing unit 110, a confirmation control unit 120, a camera 131, a microphone 132, an odor receptor 133, a projector 141, a speaker 142, and an odor generator 143. The second room 200 is equipped with a video storage unit 210, a data transmission unit 220, a camera 231, a microphone 232, and an odor receptor 233.

Firstly, the first room 100 which is a classroom where a student takes a lesson will be described. The camera 131 is a sensor for detecting motion of the student who is in the first room 100. It is needless to say that the motion of the student may be detected by a sensor other than the camera 131. For instance, a motion sensor such as Kinect may detect the motion of the student. Further, the motion of the student may be detected using two or more sensors in combination. The camera 131 performs sensing of the motion of the student. A motion information acquisition unit 135 acquires the sensing information related to the motion of the student. The camera 131 may also function as a motion information acquisition unit that acquires the sensing information related to the motion of the student. For instance, the motion information acquisition unit 135 and the cameral 131 may be configured integrally or separately. The motion information acquisition unit 135 and the camera 131 may be implemented in a user terminal such as a smartphone.

The microphone 132 detects the voice of the student. Note that the camera 131 and the microphone 132 may be disposed in a user terminal such as a smartphone, a personal computer, or a tablet terminal. The odor receptor 133 is a sensor that detects an odor in the first room 100. The microphone 132 may function as an audio information acquisition unit for acquiring the sensing information related to the voice of the student. For instance, the audio information acquisition unit 136 and the microphone 132 may be configured integrally or separately. The audio information acquisition unit 136 and the microphone 132 may be implemented in a user terminal such as a smartphone.

The projector 141 is a display unit for displaying a lesson video to the student. The speaker 142 outputs the voice corresponding to the lesson video to the student. The speaker 142 outputs the voice of the teacher (hereinbelow referred to as the teacher's voice) along with the audio included in the experience video. The odor generator 143 generates the odor associated with the experience video or the odor detected by the odor receptor 233.

The reproduction processing unit 110 performs processing for reproducing a past experience of a person who had the experience (hereinbelow referred to as an experiencer). The projector 141, the speaker 142, and the odor generator 143 are controlled in accordance with the lesson data transmitted from the data transmission unit 220. The lesson data includes, for example, the lesson video, the audio data, and the odor data.

The reproduction processing unit 110 generates the lesson video and displays the generated lesson video on the projector 141. The reproduction processing unit 110 causes the speaker 142 to output the audio data. The audio data includes, for example, audio included in the lesson video and the teacher's voice. For instance, a video output unit 145 outputs an output signal (a display output signal) for causing the display unit (the projector 141) for displaying a video to display a lesson video to the student. An audio output unit 146 outputs an output signal (an audio output signal) for causing the speaker 142 to output the audio corresponding to the lesson video. The video output unit 145 and the audio output unit 146 may each be configured such that they are incorporated in the user terminal.

The odor generator 143 generates an odor based on the odor data. The odor data includes the detection data detected by the odor receptor 233 and the detection data detected when the experience video is being shot. In this way, it is possible to reproduce a past experience of an experiencer. That is, it is possible to reproduce, in a virtual space, past experiences of others.

The confirmation control unit 120 performs control for confirming the motion and the voice of the student. For instance, the confirmation control unit 120 analyzes the detection results as regards the motion and the voice of the student and confirms the processing with which the student desires to proceed. Then, the confirmation control unit 120 transmits the confirmation result to a progression control unit 300. The confirmation control unit 120 and the reproduction processing unit 110 can be implemented by a user terminal such as a personal computer or a smartphone. Further, a display device may be used for the speaker of the user terminal.

The student can answer the question included in the lesson data by making an utterance or a gesture. The camera 131 and the microphone 132 detect the utterance or the gesture made by the student. The confirmation control unit 120 confirms, in accordance with the results of the detection by the camera 131 and the microphone 132, that the student has answered the question. That is, based on the results of the detection by the camera 131 and the microphone 132, the confirmation control unit 120 confirms that the student has made an utterance or a gesture to advance the video so that the next scene is played. By this configuration, the progression control unit 300 advances the lesson video so that the next scene is played.

Next, the second room 200 from which the teacher offers a lesson will be described. A camera 231 takes an image of the teacher (hereinbelow referred to as a teacher's image). The motion of the teacher is detected by the camera 231. A sensor other than the camera 231 may, of course, detect the motion of the teacher. For instance, a motion sensor such as Kinect may detect the motion of the teacher. Furthermore, the motion of the teacher may be detected using two or more sensors in combination.

The microphone 232 detects the teacher's voice. Note that the camera 231 and the microphone 232 may be those disposed in a user terminal such as a smartphone, a personal computer, or a tablet terminal. The odor receptor 233 is a sensor that detects the odor in the second room 200. Further, the second room 200 may be equipped with a display device and a speaker through which the teacher outputs the motion and the voice of student. By this configuration, a lesson can be conducted in such manner that the teacher and the student can have a remote conversation.

The video storage unit 210 stores the experience data related to the past experience of an experiencer. The video storage unit 210 functions as an experience video storage unit for storing an experience video that is based on the actual experience of the experiencer. Examples of experience videos include a video of the experience giving an order at a restaurant, a video of the experience of shopping at a store, a video of the experience up to the time of boarding an airplane at an airport, a video of the experience up to the time of boarding a train at a station, a video of the experience of transferring trains at a station, and a video of the experience of transiting at an airport. The video storage unit 210 stores a plurality of experience videos of the past experiences of the experiencer as a database. The video storage unit 210 functions as the experience video storage unit that stores at least either one of an experience video based on an actual experience of an experiencer and a simulated experience video.

An image acquisition unit 221 acquires at least one experience video from among the experience videos stored in the experience video storage unit. Note that the experience video may be an experience video based on the actual experience of the experiencer or may be a simulated experience video. The simulated experience video may be a video generated in a virtual space. Alternatively, the simulated experience video may be a video to which various information and images are added to the actual experience video. The simulated experience video may be a video of a fictitious experience. The video acquisition unit 221 acquires the experience video which the student has selected.

Specifically, the experiencer who is a person other than the student has gear such as the camera and the microphone mounted on himself/herself. The experiencer who has the camera mounted on himself/herself visits places for eating and drinking such cafes, restaurants, and bars to thereby shoot an experience video. A plurality of experience videos are recorded in the video storage unit 210. The experience video may be a moving image or may be one or more still images. Note that the experiencer may be the student himself/herself. That is, the experience video related to the past experiences of the student may be stored in the video storage unit 210. Further, the experiencer may be, for instance, a robot. A plurality of experience videos are registered as the lesson contents. Further, there may be a point in the experience video at which the student or the teacher can make selection of his/her own (hereinbelow referred to as a selection point).

The video storage unit 210 may store the experience data other than the experience video. For instance, the audio and the odor acquired at the time of having the experiences are stored as the experience data. The audio and the odor acquired at the time of having the experience are associated with the experience video and stored in the video storage unit 210. Further, the first room 100 and the second room 200 may be equipped with instruments and tools that correspond to those in the experience video. For instance, the experience video of scenes at a restaurant may include images of foods and drinks, containers, foodstuff, kitchenware etc.

The progression control unit 300 is connected to the first room 100 and the second room 200 via a network in such manner as to be able to establish communication with the first room 100 and the second room 200, respectively. The progression control unit 300 can be, for instance, a remote server that controls the projector 141, the speaker 142, or the like. Here, the progression control unit 300 is described as being disposed at a site remote from the first room 100 and the second room 200. However, a part of or the whole progression control unit 300 may be disposed in the first room 100 or the second room 200. That is, a part of the processing performed by the progression control unit 300 may be implemented by the teacher's terminal or the student's terminal. The progression control unit 300 controls the output of the video output unit 145 and the output of the audio output unit 146 in accordance with at least one of the sensing information acquired by the motion information acquisition unit 135 and the sensing information acquired by the audio information acquisition unit 136, to thereby control the progression of the lesson video displayed on the display unit (the projector 141).

The progression control unit 300 receives the confirmation result of the motion and the voice of the student from the confirmation control unit 120. The progression control unit 300 generates the lesson data in accordance with the confirmation result. The data transmission unit 220 transmits the lesson data to the reproduction processing unit 110. The lesson data is transmitted to the reproduction processing unit 110 in the first room 100 via a network such as the internet.

The lesson data includes the lesson video, the audio data, and the odor data. The progression control unit 300 generates the lesson video in which the teacher's image taken by the camera 231 is combined with the experience video stored in the video storage unit 210. For instance, the progression control unit 300 may generate a lesson video by attaching the teacher's image to the experience video. Alternatively, the progression control unit 300 may generate a lesson video by attaching the teacher's image on the outside of the experience video.

The progression control unit 300 can control the scenes in the experience video in accordance with the confirmation result. The progression control unit 300 controls the progression of the scenes in the experience video in accordance with the result of detection by at least one of the camera 131 and the microphone 132. That is, the progression control unit 300 advances the experience video so that the next scene is played or the scenes are changed in accordance with the motion and the voice of the student. Specifically, when the experience video is a moving image, the progression control unit 300 changes the scenes of the video by forwarding the video or rewinding the video. Further, when the experience video includes a plurality of still images, the still images to be displayed are switched in accordance with the confirmation result. Further, the progression control unit 300 may change the angle, the position and the like of the experience video in accordance with the confirmation result.

The progression control unit 300 generates data for superimposing the teacher's image on the experience video in accordance with the confirmation result. For instance, the position in the experience video on which the teacher's image is superimposed is determined in advance. Further, the progression control unit 300 may change the position at which the teacher's image is superimposed as the scene progresses. Alternatively, the position at which the teacher's image is superimposed may be determined by the teacher or an administrator other than the teacher. Further, the progression control unit 300 may control the size, the orientation, and the angle of the teacher's image in the experience video.

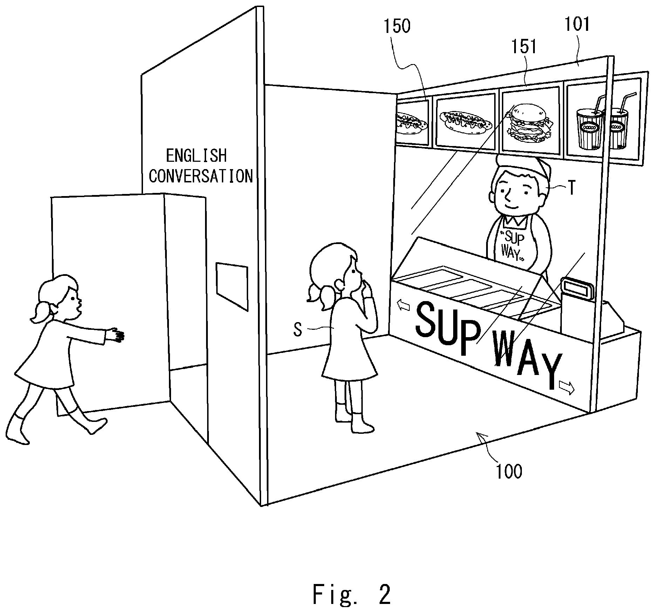

Fig. 2 is a diagram showing an example of a lesson video displayed on the projector 141. A lesson video 150 is displayed in the first room 100 which the student S enters. The lesson video 150 has the experience video 151 as the background thereof on which an image T of the teacher (hereinafter referred to as the teacher's image T) is superimposed.

The experience video 151 is a video in which an experience of making an order at a sandwich store is reproduced. The experience video 151 is a video that is taken when the experiencer is making an order at a sandwich store. In the experience video 151, the video is taken at an order counter of a sandwich store. For instance, the system is configured so that the student S can select the desired experience video 151 from among the plurality of experience videos. The student S can have an experience simulating the actual experience of the experiencer.

Here, the lesson video is projected on a wall 101 of the first room 100. The lesson video 150 may be projected on the ceiling or the floor of the first room 100 instead of the wall 101.

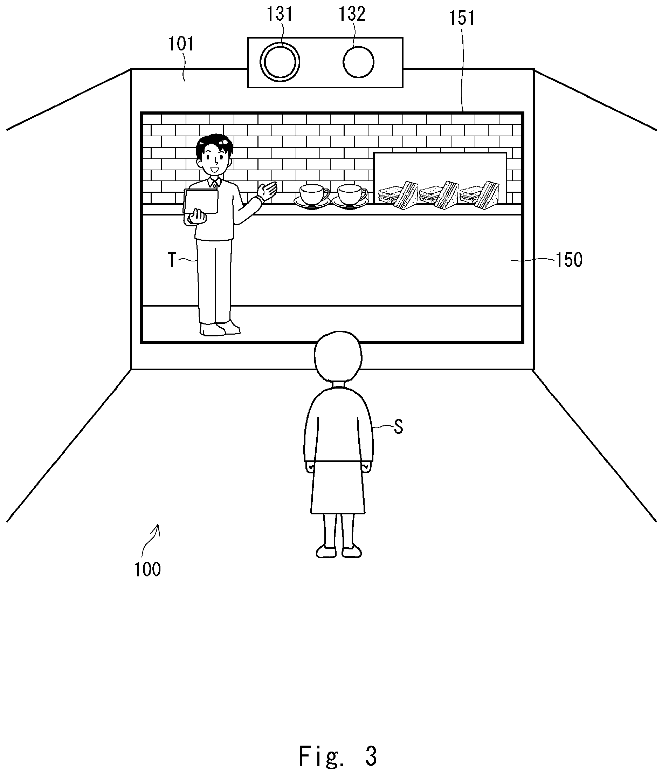

How the progression of the lesson video is controlled will be described with reference to Figs. 3 to 5. Fig. 3 shows the timing at which the student S enters the first room 100. Here, as the experience video 151, the order counter at a sandwich store is shown. In the lesson video, the teacher plays the role of a store staff.

The teacher's image T is superimposed on the experience video 151. The lesson video 150 on which the teacher's image T is superimposed is projected on the wall surface 101 of the first room 100. Therefore, the first room 100 is a VR (Virtual Reality) space that reproduces a scene at the store as if the student S is at an actual store.

Here, an English conversation lesson of a conversation held between the customer and the shop staff at the time of ordering is performed. For instance, the student S utters to select the toppings and order an original sandwich. The microphone 132 detects the utterance made by the student S. Further, the camera 131 detects the motion of the student S. Further, in the second room 200, the teacher plays the role of the store staff who takes the order. The microphone 232 detects the utterance made by the teacher and the camera 231 detects the motion of the teacher. By this configuration, the student S can take an English lesson performed by the teacher who is at a remote site.

In accordance with the results of detection by the microphone 132 and the camera 131, the confirmation control unit 120 or the progression control unit 300 detects that the order has been completed. Alternatively, the completion of the order may be detected in accordance with the results of detection by the camera 231 and the microphone 232. For instance, a specific motion of the student S or the teacher may be registered as a trigger for switching the scenes. Further, a specific word for advancing the lesson video so that the next scene is played may be determined in advance. When the student S or the teacher utters a specific word, the progression control unit 300 advances the lesson video so that the next scene is played. That is, in accordance with the results of detection by the microphones 132, 232, the progression control unit 300 controls the progression of the lesson video. The scenes may be switched when the student S or the teacher presses a button of his/her terminal.

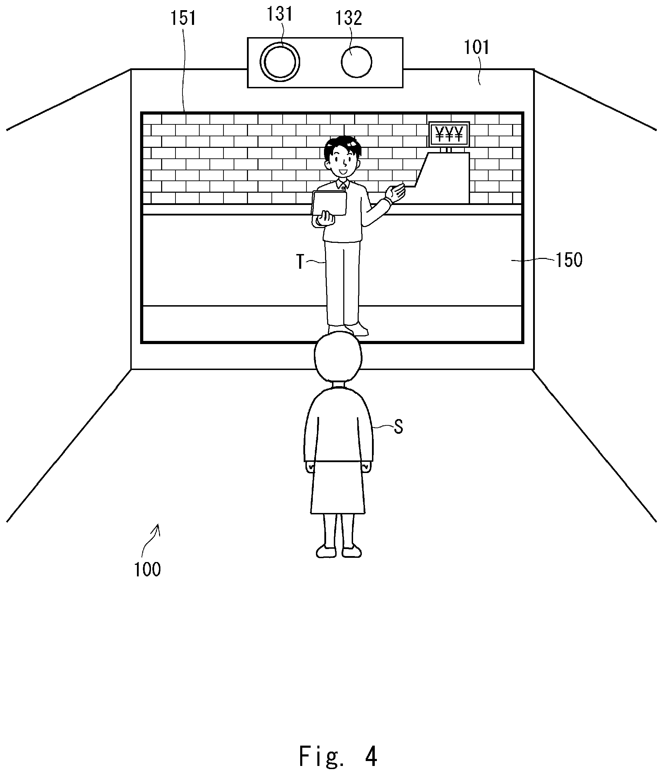

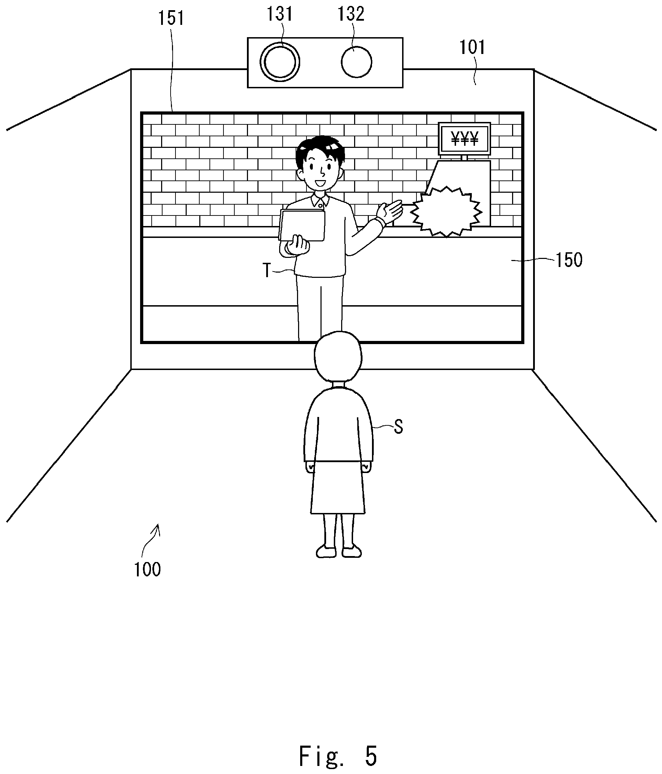

When the order is completed, the lesson video is advanced so that the next scene is played (Fig. 4). In Fig. 4, an experience video 151 which is a video taken in front of a cash register is displayed. Here, an English conversation that takes place when paying at the cash register is reproduced. When the student S makes the payment, the lesson video may be advanced so that the next scene is played (Fig. 5). Here, the student is able to recognize that the order has been successively made from the sound effect, the visual effect, the odor, the wind, and the like. For example, the odor generator 143 reproduces the smell of the sandwich for which an order has been placed. Alternatively, the speaker 142 may output a sound or the like indicating that the order has been successfully made. Alternatively, the projector 141 may make a highlight indicating that the order has been successfully made.

The reproduction processing unit 110 generates a lesson video in which the teacher's image T is superimposed on the experience video. Then, the projector 141 displays the lesson video to the student S. The student S is able to take a lesson in a space where the past experience of the experiencer is reproduced. The student S can take an English conversation lesson by visually confirming the lesson video. The student S can study through the simulated experience video. Therefore, the learning effect can be enhanced. Further, in accordance with the results of detection by the cameras 131, 231 and the microphones 132, 232 or the like, the progression control unit 300 controls the progression of the lesson video. Thus, the progression of the lesson video can be appropriately managed.

Note that the teacher's image T is not limited to an image of an actual teacher in the video but may be an avatar image. For instance, the reproduction processing unit 110 creates an avatar image. Further, the teacher may not be limited to a real person and may be software-generated. For instance, the teacher can be implemented by software loaded with AI (Artificial Intelligence), such as an interactive robot. In this case, a camera 231, a microphone 232, an odor receptor 233, and the like are not required in the second room where the teacher is present. Further, an AI teacher may control the progression of the lesson video.

The display device for displaying the experience video and the teacher's image to the student S is not limited to the projector 141. For instance, the display unit may be a head-mounted display capable of VR display. Further, the second room 200 may be equipped with a display for displaying the student S as an avatar image.

Further, a help screen can be displayed by performing an overlay operation. In the explanation given above, there was only one student, but there may be two or more students. For instance, two or more students may be in the first room 100. Alternatively, there may be another student in the first room 100 and a third room different from the second room 200. Two students may play the roles of a clerk and a customer, respectively, and the teacher may control the progression of the lesson video displayed in each room from a different room.

In the explanation given above, there was only one teacher, but there may be two or more teachers. Also, there may be participants other than the teacher and the students. Some of the teachers, the students, and the participants may be software-generated.

The teacher may give feedback on the lesson to the student S. By accumulating the feedback results, each lesson can be performed more efficiently. Further, each lesson may be evaluated according to the utterance or the motion made by the student S. By accumulating the evaluation results of a plurality of students, more efficient lessons can be provided. Further, the student S may evaluate the teacher. Thus, it is possible to contribute to the improvement of the teaching skills of the teacher.

Further, the progression of the lesson may be controlled by a third party other than the student and the teacher. For instance, an administrator of the lesson system 1000 may control the progression of the lesson video. Alternatively, the computer may automatically control the progression of the lesson video. For instance, it is possible to control the progression of the lesson video using AI. At least one of a student, a teacher, a third party, and a computer program can control the progression of the lesson video.

The display unit that displays the lesson video for making the first room 100 into a virtual space can take various forms. For instance, a monitor on the wall of the room may be used to create a virtual space. That is, a monitor or a screen on the wall displays the lesson video. Alternatively, the lesson video may be displayed using the head-mounted display. The lesson video may be displayed in a real space viewed through a smart glass or a mobile terminal screen equipped with a camera. The display unit may display avatar images of the teacher, the students, and the like. Further, the display unit may display the teacher's image and the lesson video as a stereoscopic image (a 3D image). In the first room 100, a virtual space can be created by augmented reality (AR: Augumented Reality).

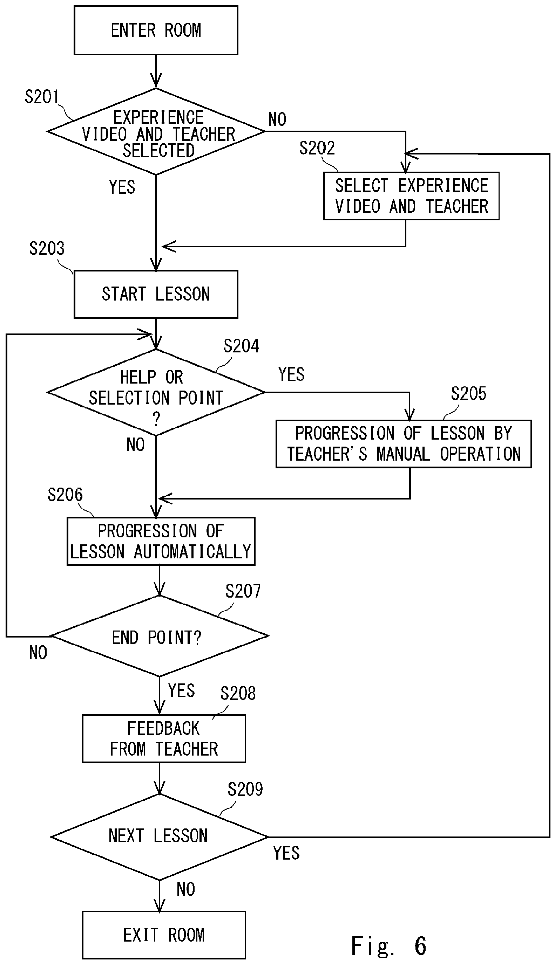

Next, a method of taking a lesson will be described with reference to Fig. 6. Fig. 6 is a flowchart showing a method of taking a lesson.

First, the progression control unit 300 determines whether or not a lesson and a teacher have been selected by the student S in advance (S201). For instance, when booking a lesson, the student S can designate the experience video and the teacher for the lesson by operating a portable terminal or the like. When the experience video and the teacher are selected in advance (YES in S201), the progression control unit 300 starts the lesson in accordance with the selected contents (S203). When the experience video and the teacher are not selected in advance (NO in S201), the student selects the experience video and the teacher (S202). The progression control unit 300 starts the lesson with the selected the selected experience video and the selected teacher (S203).

When the lesson starts, the progression control unit 300 reproduces the selected experience video. The reproduction processing unit 110 generates a lesson video in which the teacher's image T is superimposed on the experience video. In this way, the lesson progresses. The progression control unit 300 determines whether or not there was a request for help by the student or a selection point (S204).

When there is neither a request for help by the student nor a selection point (NO in S204), the progression control unit 300 automatically progresses with the lesson (S206). For example, based on the motion and the utterance of the student S detected by the camera 131 and the microphone 132, the confirmation control unit 120 confirms the processing desired by the student S. In accordance with the confirmation result, the progression control unit 300 causes the experience video to proceed to play the scenes.

If there is a request for help from the student or a selection point (YES in S204), the teacher progresses with the lesson manually (S205). Alternatively, a person other than the instructor, for example, a system administrator or the like may progress with the lesson. Then, the progression control unit 300 automatically progresses with the lesson (S206).

The progression control unit 300 determines whether or not there is an end point in the experience video (S207). When the experience video has not reached the end point (NO in S207), the step returns to S204 and the lesson is continued. When the experience video has reached the end point, (YES in S207), the teacher gives feedback as regards the lesson to the student (S208). The feedback result from the teacher may be registered in the database indicating the scoring results.

The student S determines whether or not he/she is going to take the next lesson (S209). When the student is going to take the next lesson (YES in S209), the step returns to Step S202 and the student S selects the lesson to he/she is going to take and the teacher who performs the lesson. When the student S has not selected the next lesson he/she is going to take (NO in S209), the student S leaves the first room 100 and the lesson ends. By this configuration, a lesson of high learning efficiency can be provided.

The video storage unit 210 may be a storage unit installed in a server and a terminal included in the system of the present disclosure. In this case, the video acquisition unit 221 may be a device or the like such as an ECU (electronic control unit) configured to extract information from the video storage unit 210 and perform control based on the acquired information. Further, the video storage unit 210 may be a storage unit installed in a (foreign or domestic) server or terminal outside the system of the present disclosure. In this case, the video acquisition video 221 may be a device such as an ECU or a server or a terminal configured to acquire information stored in the video storage unit 210 by extracting the stored information through communication or the like and to perform calculation for performing control based on the acquired information.

The motion information acquisition unit 135 may be a sensor (e.g., a camera, a point group measurement sensor, or the like) that performs sensing of the motion. Further, the motion information acquisition unit 135 may be a reception unit (such as a device for reception) (provided on a server, a display unit, or the like of the system) that acquires the data for which sensing has been performed from the aforementioned sensor via wired or wireless communication. The motion information acquisition unit 135 may be incorporated in the user terminal.

The audio information acquisition unit 136 may be a sensor (e.g., a microphone) that performs sensing of a voice. Further, the audio information acquisition unit 136 may be a reception unit (such as a device for reception) (provided on a server, a display unit, or the like of the system) that acquires the data for which the sensing has been performed from the aforementioned sensor via wired or wireless communication. The audio information acquisition unit 136 may be incorporated in the user terminal.

A fictitious space may be created for a simulated experience video. For instance, some billboards may have advertisement displayed thereon, or the space may be used as another store by changing the types of food in the cart. For example, in Fig. 2, the billboard or the content of the cart can be replaced so that the sandwich store may be replaced with an ice cream store or other store.

Note that the lesson may not be limited to a language lesson. The lesson may be a skill lesson for acquiring skills. For instance, the lesson may be a lesson for rehabilitation. It may be a lesson for a doctor, a medical person, a nursing staff, a PT (physical therapist), etc., who assists rehabilitation.

It is possible to implement the aforementioned lesson system 1000 by a computer program. For instance, at least one of the processor of the user terminal of the student S, the user terminal of the teacher, and the server can perform the aforementioned processing.

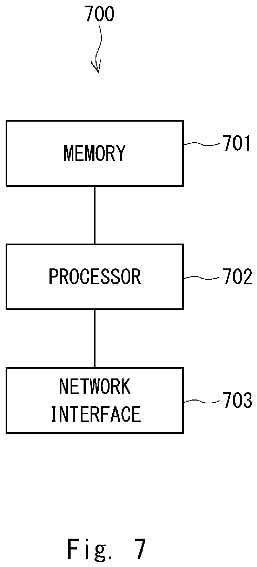

Next, the hardware configuration of the lesson system 1000 according to this embodiment will be described. Fig. 7 is a block diagram showing an example of a hardware configuration of the lesson system 700. As shown in Fig. 7, the lesson system 700 includes, for instance, at least one memory 701, at least one processor 702, and a network interface 703.

The network interface 703 is used for establishing communication with other devices via wired or wireless network. The network interface 703 may include, for instance, a networking interface card (NIC). The lesson system 700 acquires an experience image and a teacher's image via the network interface 703.

The memory 701 is configured of a combination of a volatile memory and a non-volatile memory. The memory 701 may include a storage located away from the processor 702. In this case, the processor 702 may access the memory 701 via an I/O interface (not shown).

The memory 701 is used to store a software (a computer program) including one or more instructions to be executed by the processor 702. A program for executing the aforementioned lesson method may be stored.

Further, in the aforementioned embodiment, the present disclosure has been described in terms of its hardware configuration but it is not limited thereto. The present disclosure can be realized by causing a CPU (Central Processing Unit) to execute a computer program for controlling the lesson system.

Further, the aforementioned program can be stored and provided to a computer using any type of non-transitory computer readable media. Non-transitory computer readable media include any type of tangible storage media. Examples of non-transitory computer readable media include magnetic storage media, optical magnetic storage media, CD-ROM (Read Only Memory), CD-R, CD-R/W, and semiconductor memories. Examples of magnetic storage media include floppy disks, magnetic tapes, and hard disk drives. Examples of optical magnetic storage media include magneto-optical disks. Examples of semiconductor memories include mask ROM, PROM (Programmable ROM), EPROM (Erasable PROM), flash ROM, and RAM (Random Access Memory). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A lesson system (1000) comprising:
a video acquisition unit (221) configured to acquire at least one experience video from a storage unit (210), the storage unit (210) being configured to store at least one of an experience video based on an actual experience of an experiencer and a simulated experience video;
a motion information acquisition unit (135) configured to acquire sensing information related to a motion of a student (S);
an audio information acquisition unit (136) configured to acquire sensing information related to a voice of the student (S);
a reproduction processing unit (110) configured to generate a lesson video in which an image of a teacher is superimposed on the experience video;
a video output unit (145) configured to output an output signal for causing a display unit (141) for displaying a video to display the lesson video to the student;
an audio output unit (146) configured to output an output signal for causing a speaker (142) for outputting audio to output audio corresponding to the lesson video; and
a progression control unit (300) configured to control progression of the lesson video displayed on the display unit by controlling each of the output of the video output unit and the output of the audio output unit in accordance with at least one of the sensing information acquired by the motion information acquisition unit and the sensing information acquired by the audio information acquisition unit.

2. The lesson system according to Claim 1, further comprising a camera (231) for the teacher configured to take an image of the teacher who is at a site remote from the student,
wherein the display unit (141) is configured to display the lesson video in which the image of the teacher taken by the camera for the teacher is superimposed on the experience video.

3. The lesson system according to Claim 2, wherein the image of the teacher is an avatar image of the teacher.

4. The lesson system according to any one of Claims 1 to 3, wherein the display unit (141) comprises a projector (141) for projecting the lesson video on a wall of a classroom where the student is present.

5. The lesson system according to any one of Claims 1 to 4, further comprising a microphone (232) for the teacher configured to detect a voice of the teacher,
wherein the speaker (142) is configured to output the voice of the teacher along with audio included in the lesson video.

6. A lesson method comprising the steps of:
acquiring at least one experience video from a video storage unit, the video storage unit (210) being configured to store at least one of an experience video based on an actual experience of an experiencer and a simulated experience video;
acquiring sensing information related to a motion of a student;
acquiring sensing information related to a voice of the student;
generating a lesson video in which an image of a teacher is superimposed on the experience video;
outputting an output signal for causing a display unit (141) for displaying a video to display the lesson video to the student;
outputting an output signal for causing a speaker (142) for outputting audio to output audio corresponding to the lesson video; and
controlling progression of the lesson video displayed on the display unit by controlling each of the output signal of the video and the output signal of the audio in accordance with at least one of the sensing information related to the motion of the student and the sensing information related to the voice of the student.

7. The lesson method according to Claim 6, wherein
a camera (231) for the teacher configured to take an image of the teacher who is at a site remote from the student is disposed, and
the lesson video in which the image of the teacher taken by the camera (231) for the teacher is superimposed on the experience video is displayed by the display unit (141).

8. The lesson method according to Claim 7, wherein the image of the teacher is an avatar image of the teacher.

9. The lesson method according to any one of Claims 6 to 8, wherein the display unit comprises a projector (141) for projecting the lesson video on a wall of a classroom where the student is present.

10. The lesson method according to any one of Claims 6 to 9, wherein
a microphone (232) for the teacher configured to detect a voice of the teacher is provided, and
the voice of the teacher is output along with audio included in the lesson video.

11. A program for causing a computer to perform a lesson method comprising the steps of:
acquiring at least one experience video from an experience video storage unit, the experience video storage unit (210) being configured to store at least one of an experience video based on an actual experience of an experiencer and a simulated experience video;
acquiring sensing information related to a motion of a student;
acquiring sensing information related to a voice of the student;
generating a lesson video in which an image of a teacher is superimposed on the experience video;
outputting an output signal for causing a display unit (141) for displaying a video to display the lesson video to the student;
outputting an output signal for causing a speaker (142) for outputting audio to output audio corresponding to the lesson video; and
controlling progression of the lesson video displayed on the display unit (141) by controlling each of the output signal of the video and the output signal of the audio in accordance with at least one of the sensing information related to the motion of the student and the sensing information related to the voice of the student.

12. The program according to Claim 11, wherein
a camera (231) for the teacher configured to take an image of the teacher who is at a site remote from the student is disposed, and
the lesson video in which the image of the teacher taken by the camera for the teacher is superimposed on the experience video is displayed by the display unit (141).

13. The program according to Claim 12, wherein the image of the teacher is an avatar image of the teacher.

14. The program according to any one of Claims 11 to 13, wherein the display unit comprises a projector (141) for projecting the lesson video on a wall of a classroom where the student is present.

15. The program according to any one of Claims 11 to 14, wherein
a microphone (232) for the teacher configured to detect a voice of the teacher is provided, and
the voice of the teacher is output along with audio included in the lesson video.
